# DEMANDE DE BREVET EUROPEEN

(11) **EP 2 091 201 A1**
(43) Date de publication de la demande: **19.08.2009**
(21) Numéro de dépôt: 09290088.5
(22) Date de dépôt: 06.02.2009
(51) Int. Cl.: H04L 29/06

(54) **Procédé et dispositif de transfert d'un signal de flux média au cours d'une session de communication**

(30) Priorité: 12.02.2008 FR 0800749
(71) Demandeur: Societé Française du Radiotéléphone, 75008 Paris (FR)
(72) Inventeur: Boutignon, Antoine, 75005 Paris (FR); De Moissac, Arnaud, 75017 Paris (FR)
(74) Mandataire: Debay, Yves

(57) **Abrégé**

La présente invention concerne un procédé de modification d'au moins un terminal dans le transfert d'au moins un flux média au cours d'une communication entre un appelé et un appelant, sans interrompre la session de communication, cette communication faisant intervenir au moins un réseau de téléphonie qui met en jeu notamment un serveur MDS, et les formats d'initialisation et de description SIP et SDP, **caractérisé en ce que** le procédé comprend au moins :
- une étape de réponse à une invitation émise par le MDS, de la part d'au moins un terminal par un signal intégrant une description de l'offre proposée par un protocole SDP,
- une étape d'analyse et de gestion des descriptions des offres récupérées,
- une étape d'envoi d'un signal par le MDS commandant l'établissement d'une nouvelle organisation de la session et redéfinissant le transfert d'au moins un signal de flux média, audio et/ou vidéo.

## Description

La présente invention se rapporte au domaine des systèmes de transfert d'un signal téléphonique et plus particulièrement au domaine des systèmes de transfert d'au moins une partie d'un flux média, audio ou vidéo, d'un signal téléphonique au cours d'une même communication entre un appelant et un appelé.

Les procédés mis en place actuellement pour réaliser un détournement d'un ou de plusieurs flux média entre deux terminaux interviennent essentiellement en manipulant directement les flux média. De tels procédés d'une part imposent une consommation importante de ressources mémoire et d'autre part nécessitent des systèmes dont les éléments qui les composent présentent de nombreux moyens de calcul pour traiter les flux média en temps réel dont le transfert est détourné.

Pour contourner ce problème de volume d'informations à traiter, une solution développée est d'intervenir directement sur le système de signalisation contrôlant ces flux média plutôt que sur les flux média eux-mêmes. C'est ainsi que certains dispositifs proposés pour le transfert de signal d'une communication téléphonique présentent un serveur de mobilité MS (Mobility Server) pour permettre la gestion de la mobilité de sessions entre les dispositifs de différentes technologies lors d'un transfert de signal. Ce serveur de mobilité s'inscrit dans une architecture IMS (Internet Protocol Multimedia Subsystem) qui garantit une interopérabilité des différentes briques d'un réseau d'un opérateur et une interopérabilité entre les réseaux des opérateurs de télécommunication. Cette architecture IMS est une architecture standardisée 3GPP (3rd Generation Partnership Project) et NGN (Next Generation Network) pour les opérateurs de téléphonie mobile et fixe, qui permet de fournir des services multimédias fixes et mobiles. Ce système, qui utilise la technologie VoIP (Voice over Internet Protocol) est notamment basé sur le protocole SIP (Session Initiation Protocol), un langage adapté à l'établissement et à la gestion de connexions de tiers à tiers ou de tiers à serveurs. Le serveur de mobilité qui permet de transférer le signal d'une communication téléphonique d'un terminal à un autre, utilise alors une interface identique à celle des autres services d'application pour se connecter à l'IMS. Ce serveur de mobilité permet de contrôler la mobilité de certains éléments tels que la mobilité d'une session, la mobilité d'un service, la mobilité d'une personne que des mécanismes de gestion de mobilité de réseau ne sont pas en mesure de contrôler. Ce serveur de mobilité en étant connecté à l'architecture IMS permet de coopérer avec d'autres services pour améliorer le contrôle de la mobilité. Parallèlement, ce serveur de mobilité peut être combiné à un agent directeur de recherche de services (Service Discovery Directory Agent) pour faciliter la mobilité d'une communication en proposant une liste de dispositif adapté à la réalisation d'une requête de transmission d'un signal vers un dispositif cible.

Par rapport à l'état de l'art et notamment la publication intitulée « Session Mobility between Heterogeneous Accesses with the Existence of IMS as the Service Control Overlay », rédigée par Medhi MANI et Noël CRESPI de GET-INT, il est connu d'ajouter ou de retirer des flux média au cours d'une session, ainsi que d'insérer un tiers, tel que le SSAV (Serveur de Streaming Audio-Vidéo) en coupure de flux média.

La présente invention a pour objet de supprimer un ou plusieurs inconvénients de l'art antérieur et notamment de proposer une solution qui permette la gestion du transfert d'au moins un signal de flux média au cours d'une communication sans interrompre la session de la communication en cours.

Cet objectif est atteint grâce à un procédé de modification d'au moins un terminal, comme récepteur et/ou émetteur, dans le transfert d'au moins un signal de flux média du type RTP (Real-time Transport Protocol), audio et/ou vidéo, au cours d'une session de communication entre au moins un appelé et un appelant, sans interrompre la session de communication, cette communication faisant intervenir au moins un réseau de téléphonie, mobile et/ou fixe, qui met en jeu un ou plusieurs équipements particuliers du réseau dont notamment un serveur de mobilité (MDS, pour Mobilité De Service), le procédé faisant intervenir les formats d'initialisation et de description SIP (*Session Initiation Protoco*/) et SDP (*Session Description Protoco*/) au sein d'une architecture de type IMS, **caractérisé en ce que** le procédé comprend au moins :
- une étape de réception par le MDS d'un signal déclencheur d'une modification, et/ou d'une introduction et/ou d'une suppression d'au moins un terminal, récepteur et/ou émetteur, parmi les terminaux qui participent à une session de communication en cours ou qui sont susceptibles d'y participer,
- une étape d'émission par le MDS d'un signal d'invitation (INVITE (No SDP) n'intégrant pas un protocole SDP, pour participer à la session de communication en cours à au moins un terminal intervenant dans la session de communication ou destiné à intervenir dans la session de communication,
- une étape de réponse à l'invitation, de la part d'au moins un terminal ayant reçu le signal d'invitation (INVITE (No SDP), par un signal (200/OK (SDPAxVy)) intégrant une description de l'offre proposée, audio et/ou vidéo, par un protocole SDP,
- une étape d'analyse et de gestion des descriptions des offres transmises par les différents terminaux par une logique applicative assurée par le MDS pour organiser un routage d'au moins un flux média compatible avec l'ensemble des terminaux concernés, cette étape débutant après réception de toutes les réponses aux signaux d'invitations,
- une étape d'envoi d'un signal (ACK (SDPAxVy)) par le MDS commandant l'établissement d'une nouvelle organisation de la session et définissant les terminaux qui interviennent dans la communication pour le transfert d'au moins un signal de flux média, audio et/ou vidéo.

Il doit être entendu, dans le présent document, que le terme modification d'un terminal concerne le changement d'un terminal destinataire ou émetteur d'un flux.

Selon une variante de l'invention, le procédé de modification d'au moins un terminal dans le transfert d'au moins un signal de flux média est **caractérisé en ce que** le signal d'invitation (INVITE (No SDP) émis par le MDS et n'intégrant pas un protocole SDP, pour participer à la session de communication en cours est transmis à deux terminaux destinés à intervenir dans la session de communication, un premier terminal destiné à recevoir un flux média audio et un second terminal destiné à recevoir un flux média vidéo, de façon à transférer simultanément les flux média, audio et vidéo, d'un même terminal.

Selon une autre variante de l'invention, le procédé de modification d'au moins un terminal dans le transfert d'au moins un signal de flux média est **caractérisé en ce que** le procédé comprend, au préalable, une étape d'établissement d'un dialogue avec au moins un terminal extérieur à la communication et destiné à intégrer la communication, cette étape comprenant au moins :
- une étape d'émission d'une invitation (INVITE (No Media)) sans média par le MDS pour au moins un des terminaux extérieurs à la communication,
- une étape de réponse à l'invitation par un signal (200/OK (No Media)) sans média, de la part du terminal ayant reçu le signal d'invitation,
- une étape de confirmation (ACK) par le MDS de la bonne réception du signal émis par le terminal ayant reçu le signal d'invitation,
ces étapes de dialogue préalable éliminant les problèmes de temps de réponses lors de connexions de plusieurs terminaux extérieurs.

Selon une autre variante de l'invention, le signal déclencheur d'une modification ordonnant, au cours d'une session de communication, la modification d'un terminal de communication, récepteur et/ou émetteur, avec le transfert d'au moins un signal du flux média, audio et/ou vidéo, vers un terminal extérieur à la session de communication et adapté au flux média transféré, le procédé de modification d'au moins un terminal dans le transfert d'au moins un signal de flux média est **caractérisé en ce que** l'étape d'analyse et de gestion des descriptions d'offres proposées par une logique applicative du MDS assure notamment :
- l'intégration dans la communication du terminal de communication initialement extérieur à la session de communication, et/ou
- le transfert d'au moins une partie du signal du flux média, audio et/ou vidéo, au terminal de communication nouvellement intégré dans la communication, et/ou
- le retrait du terminal de communication de la session de communication par émission d'un signal SIP de désactivation (INVITE (SDP media desactivated)) par le MDS à l'attention du terminal dont le flux média a été transféré au terminal nouvellement intégré lorsque la session de communication est maintenue ouverte avec les terminaux qui ne portent plus de flux média, et/ou
- le retrait du terminal de communication de la session de communication par émission d'un signal SIP de fin de session (BYE) lorsque les sessions des terminaux ne portant plus de flux média sont fermées.

Selon une autre variante de l'invention, le signal déclencheur d'une modification ordonnant, au cours d'une communication, le transfert du signal du flux média, audio et/ou vidéo, depuis un terminal intégré dans la session de communication vers un ou plusieurs terminaux de communication extérieurs à la session de communication et aux fonctionnements adaptés à au moins un flux média, audio et/ou vidéo, le procédé de modification d'au moins un terminal dans le transfert d'au moins un signal de flux média est **caractérisé en ce que** le procédé assure un transfert successif du signal du flux média audio et du signal du flux média vidéo depuis le terminal initialement intégré dans la session de communication vers un ou plusieurs nouveaux terminaux extérieurs à la session de communication et adaptés au flux média, le transfert d'un premier flux média comprenant au moins :
- une étape d'émission par le MDS d'un signal d'invitation (INVITE (No SDP)), n'intégrant pas un protocole SDP, pour participer à la session de communication au terminal intégré dans la communication dont les flux média vont être transférés ainsi qu'à un premier terminal, extérieur à la session de communication et dont le fonctionnement est adapté à au moins un premier flux média,
- une étape de réponse à l'invitation par les terminaux invités avec un signal (200/OK (SDPAxVy)) intégrant une description de l'offre qu'ils proposent respectivement, audio et/ou vidéo, par un protocole SDP,
- une étape d'émission par le MDS d'un signal d'invitation (INVITE (SDPAxVy)) intégrant le protocole SDP et les offres proposées par les terminaux ayant répondu, au second terminal de la conversation dont les flux média ne sont pas transférés,
- une étape de réponse à l'invitation par le terminal avec un signal (200/OK (SDPAxVy)) qui intègre une description de l'offre du terminal,
- une étape d'analyse et de gestion des descriptions des offres proposées transmises par les différents terminaux que sont d'une part les terminaux de la session de communication initiale et d'autre part le premier terminal invité, extérieur à la session de communication,
- une étape d'intégration dans la session de communication du premier terminal invité par transfert du signal d'un des flux média, audio ou vidéo, le signal de flux média non transmis étant maintenu avec le terminal initialement intégré dans la session de communication et dont au moins un flux média est transféré,
le transfert d'un second flux média comprenant au moins :
- une étape d'émission par le MDS d'un signal d'invitation (INVITE (No SDP)), n'intégrant pas un protocole SDP, pour participer à une session de communication d'une part au nouveau terminal intégré dans la communication et d'autre part à un second terminal récepteur, extérieur à la communication et au fonctionnement adapté à au moins un second flux média,
- une étape de réponse à l'invitation par les terminaux invités avec un signal (200/OK (SDPAxVy)) intégrant une description de l'offre proposée par chaque terminal, audio et/ou vidéo, par un protocole SDP,
- une étape d'émission par le MDS d'un signal d'invitation (INVITE (SDPAxVy)) intégrant le protocole SDP et les nouvelles offres proposées par les terminaux ayant répondu, au second terminal de la conversation dont les flux média ne sont pas transférés,
- une étape de réponse à l'invitation par le terminal avec un signal (200/OK (SDPAxVy)) qui intègre une description de l'offre du terminal
- une étape d'analyse et de gestion des descriptions des offres transmises par les différents terminaux que sont d'une part les terminaux intégrés dans la session de communication et d'autre part le second terminal récepteur invité,
- une étape d'intégration du second terminal dans la session de communication par transfert du signal du second des flux média, audio ou vidéo,
et le retrait du terminal initialement intégré à la session de communication par l'émission d'un signal SDP de désactivation (INVITE (SDP media desactivated)) par le MDS à l'attention du terminal dont les flux média ont été transférés, **ou le** retrait du terminal de communication de la session de communication par émission d'un signal SIP de fin de session (BYE) lorsque les sessions des terminaux ne portent plus de flux média.

Selon une autre variante de l'invention, le procédé de modification d'au moins un terminal dans le transfert d'au moins un signal de flux média est **caractérisé en ce que** le premier terminal et le second terminal extérieurs à la session de communication sont un seul et même terminal qui récupère deux flux média successifs différents.

Selon une autre variante de l'invention, le réseau comprenant au moins un terminal formé par un SSAV (Serveur de Streaming Audio-Vidéo) intégrant une base de données contenant au moins des fichiers vidéo et/ou audio, le signal déclencheur d'une modification ordonnant, au cours de la communication, la diffusion d'au moins un des fichiers du SSAV à un ou plusieurs terminaux de communication définis, récepteurs d'un flux média, vidéo et/ou audio, qui participent à la communication d'une séquence vidéo en mémoire dans le serveur SSAV, le procédé de modification d'au moins un terminal dans le transfert d'au moins un signal de flux média **caractérisé en ce que :**
- l'étape de réponse à l'invitation sans SDP (INVITE No SDP) du procédé est réalisée de sorte que le serveur SSAV transmet un nombre de signaux (200/OK (SDP AxVy)) intégrant une description de l'offre média, par un protocole SDP, égal au nombre de terminaux destinés à recevoir la séquence de flux média,
- l'étape d'analyse et de gestion des descriptions de session transmises par les différents terminaux aboutit à l'intégration du serveur SSAV dans la nouvelle session de communication entre les terminaux initialement présents dans la communication et le transfert d'au moins un signal de flux média, audio et/ou vidéo, à au moins un des terminaux définis depuis le serveur SSAV, le flux média vidéo provenant d'au moins un des terminaux étant transmis au serveur SSAV.

Selon une autre variante de l'invention, le signal déclencheur d'une modification ordonnant, au cours de la communication, la diffusion d'un flux média, audio et/ou vidéo, du serveur SSAV à un des terminaux de communication qui participent à la communication, le procédé de modification d'au moins un terminal dans le transfert d'au moins un signal de flux média est **caractérisé en ce que** l'étape d'analyse et de gestion des descriptions des offres proposées transmises par les différents terminaux aboutit à l'intégration du serveur SSAV dans la communication entre les terminaux déjà présents dans le transfert du signal d'au moins un flux média au cours de la communication, de sorte que d'une part au moins un flux média vidéo issu du serveur SSAV est au moins transmis au terminal destiné à recevoir le flux média et que d'autre part le flux média émis par au moins un des terminaux est au moins transmis au serveur SSAV.

Selon une autre variante de l'invention, le procédé de modification d'au moins un terminal dans le transfert d'au moins un signal de flux média est caractérisé en ce qu'un flux média émis par le serveur SSAV étant transmis uniquement à un terminal défini parmi les terminaux qui participent à la session de communication, les flux média, audio et vidéo, émis par le terminal défini récepteur du flux provenant du serveur SSAV, sont transmis pour l'un à au moins un autre terminal présent dans la session de communication et pour l'autre au serveur SSAV, de sorte que le terminal défini réceptionne au moins un flux média, audio et/ou vidéo, du serveur SSAV et émet au moins un flux média, audio et/ou vidéo à au moins un terminal autre que le serveur SSAV.

Selon une autre variante de l'invention, le procédé de modification d'au moins un terminal dans le transfert d'au moins un signal de flux média est **caractérisé en ce que** le procédé comprend :
- une étape de réception par le MDS d'un signal déclencheur d'une pause, au cours de la communication, dans la transmission du flux média à au moins un terminal de communication défini,
- une étape d'émission d'au moins un signal de pause (INFO (Pause)) par le MDS à destination du serveur SSAV,
- une étape de confirmation de réception du signal par le SSAV (200/INFO),
- une étape d'émission par le MDS d'au moins un signal d'invitation (INVITE (No SDP)) n'intégrant pas un protocole SDP, pour participer à la session de communication à au moins un terminal intervenant dans la session de communication,
- une étape de réponse au MDS par chacun des terminaux pour chaque invitation reçue, la réponse étant formée par un signal (200/INVITE (SDPAxVy)) intégrant une description de l'offre, audio et/ou vidéo, qu'il propose par un protocole SDP,
- une étape d'analyse et de gestion par le MDS des descriptions des offres transmises par les différents terminaux,
- une étape d'envoi d'un signal (ACK (SDPAxVy)) par le MDS confirmant la poursuite de la session de communication sans le serveur SSAV et définissant les terminaux qui interviennent dans la session de communication, le serveur SSAV recevant au moins un signal d'inactivation (ACK SDP Inactive) intégrant le protocole SDP.

Selon une autre variante de l'invention, le procédé de modification d'au moins un terminal dans le transfert d'au moins un signal de flux média est **caractérisé en ce que** le procédé comprend :
- une étape de réception par le MDS d'un signal déclencheur d'une reprise de la transmission du flux média à au moins un terminal de communication défini, au cours de la session de communication,
- une étape d'émission par le MDS d'au moins un signal d'invitation (INVITE (No SDP)) n'intégrant pas un protocole SDP, pour participer à la session de communication à au moins un terminal intervenant dans la session de communication ainsi qu'au terminal serveur SSAV,
- une étape de réponse (200/INVITE (SDPAxVy)) au MDS par chacun des terminaux pour chaque invitation reçue, la réponse étant formée par un signal intégrant une description de l'offre, audio et/ou vidéo, proposée par un protocole SDP,
- une étape d'analyse et de gestion par le MDS des descriptions des offres transmises par les différents terminaux,
- une étape d'envoi d'un signal (ACK (SDPAxVy)) par le MDS confirmant la poursuite de la session de communication intégrant le serveur SSAV dans la communication et définissant les terminaux qui interviennent dans la nouvelle session de communication,
- une étape d'envoi au SSAV par le MDS d'au moins un signal (INFO (resume)) de reprise de la transmission du flux média suspendu.

Selon une autre variante de l'invention, le procédé de modification d'au moins un terminal dans le transfert d'au moins un signal de flux média est **caractérisé en ce que** le procédé comprend :
- une étape de réception par le MDS d'un signal déclencheur d'un arrêt de la transmission du flux média à au moins un terminal de communication défini, au cours de la communication,
- une étape d'émission par le MDS d'au moins un signal d'invitation (INVITE (No SDP)) n'intégrant pas un protocole SDP, pour participer à la session de communication à au moins un des terminaux intervenant dans la session de communication et qui sont autres que le terminal serveur SSAV,
- une étape de réponse (200/INVITE (SDPAxVy)) au MDS par chacun des terminaux pour chaque invitation reçue, la réponse étant formée par un signal intégrant une description de l'offre, audio et/ou vidéo, par un protocole SDP,
- une étape d'analyse et de gestion par le MDS des descriptions des offres transmises par les différents terminaux,
- une étape d'envoi d'un signal (ACK (SDPAxVy)) par le MDS confirmant la poursuite de la session de communication, définissant les terminaux qui interviennent dans la nouvelle session de communication et retirant le serveur SSAV dans la communication,
- une étape d'envoi au SSAV par le MDS d'au moins un signal d'arrêt (BYE) de la transmission du flux média, ou
- une étape d'envoi au MDS par le SSAV d'au moins un signal d'arrêt (BYE) de la transmission du flux média.

Un autre objectif de l'invention est de proposer un dispositif qui permette la mise en oeuvre de ce procédé.

Cet objectif est atteint grâce à un dispositif de contrôle de la mise en oeuvre d'un procédé de modification et/ou d'introduction et/ou de suppression d'au moins un terminal dans le transfert d'au moins un signal de flux média, audio et/ou vidéo, au cours d'une session de communication selon l'invention, le dispositif comprenant au moins un serveur S-CSCF (Serving Call Session Control Function) positionné comme point de passage obligé des communications de contrôle des différents terminaux d'une session de communication et auquel se trouve relié un serveur de mobilité (MDS) **caractérisé en ce que** le serveur de mobilité MDS intègre un logiciel de fonctionnement SIP capable d'établir et de modifier le chemin d'un ou plusieurs flux média, audio et/ou vidéo, vers un ou plusieurs terminaux au cours d'une session de communication donnée, l'action du logiciel de fonctionnement est tributaire d'un signal de déclenchement qui commande la gestion des changements d'état dans les transferts de flux de la session de communication par le serveur MDS.

Selon une autre variante de l'invention, le dispositif de contrôle est **caractérisé en ce que** le logiciel de fonctionnement présente une interface qui permet d'ajouter, modifier ou supprimer des terminaux à la session de communication en cours et/ou d'être informé des changements d'état des terminaux grâce à un dispositif de surveillance et/ou un moyen permettant d'associer à chaque terminal au moins un contexte SIP vers lesquels les flux média, respectivement audio et vidéo, doivent être dirigés.

Selon une autre variante de l'invention, le dispositif de contrôle est **caractérisé en ce que** le dispositif comprend au moins un canal de signalisation parallèle au canal de transfert de la session média par lequel au moins un terminal est capable d'adresser une requête au serveur de mobilité MDS, et/ou d'effectuer une signalisation du transfert.

Selon une autre variante de réalisation, le dispositif de contrôle est **caractérisé en ce que** le dispositif comprend une interface http (ou web) qui permet de sélectionner et de définir au moins un terminal (3, 4, 5, 6) par son adresse IP, terminal vers lequel est transféré au moins un flux média, cette interface étant associée à un dispositif passerelle avec un serveur SIP et SDP pour contrôler le fonctionnement des protocoles SIP et SDP du procédé.

L'invention, avec ses caractéristiques et avantages, ressortira plus clairement à la lecture de la description faite en référence aux dessins annexés dans lesquels :

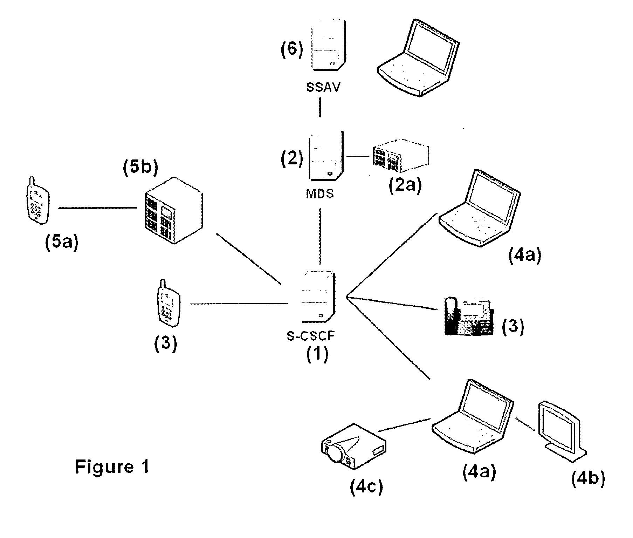

- la figure 1 représente un schéma d'un exemple d'organisation d'une partie d'un réseau permettant le fonctionnement de l'invention,
- la figure 2 représente un schéma des différentes étapes d'un mécanisme général de transfert de flux selon l'invention,
- la figure 3 représente un schéma des différentes étapes d'un mécanisme de transfert séquentiel de flux média selon l'invention,
- la figure 4 représente un schéma des différentes étapes d'un mécanisme de transfert simultané de flux média selon l'invention,
- les figures 5, 6, 7 et 8 représentent respectivement les schémas des différentes étapes d'un mécanisme de lancement du transfert, de mise en pause du transfert, de reprise du transfert et d'arrêt du transfert d'un flux média selon l'invention, le média se trouvant en mémoire sur un serveur du réseau,
- les figures 9 et 10 représentent respectivement les schémas des différentes étapes d'un mécanisme de lancement et de l'arrêt du transfert d'un flux média particulier selon l'invention, le média se trouvant en mémoire sur un serveur du réseau,
- les figures 11 et 12 représentent les schémas des différentes étapes de variantes de réalisation du mécanisme selon la figure 9.

Dans ces schémas, SDP Ax représente une description SDP d'un flux Audio x, et SDP Vy représente une description SDP d'un flux vidéo y.

Le système qui permet la mise en oeuvre de l'invention fait intervenir une architecture IMS basée entre autres sur les protocoles SIP (Session Initiation Protocol) et SDP (Session Description Protocol).

Le protocole SIP est un protocole normalisé et standardisé qui a été conçu pour établir, modifier et terminer des sessions multimédia. Ce protocole intervient dans l'authentification et la localisation des multiples participants. Il se charge également de la négociation sur les types de média utilisables par les différents participants d'une session en encapsulant des messages intégrant le protocole SDP. Le protocole SIP ne transporte pas les données échangées durant la session comme la voix ou la vidéo car ce protocole est indépendant de la transmission de données. Il convient de remarquer que tout type de données et de protocoles peut être utilisé pour cet échange, bien que le protocole RTP (Real-time Transport Protocol) assure le plus souvent les sessions audio et vidéo. Le protocole SIP partage de nombreuses similitudes avec le protocole http comme le codage et les codes de réponse.

Le client envoie des requêtes au serveur, qui lui renvoie une réponse. Les méthodes de base sont notamment :
- INVITE qui permet à un client de demander une nouvelle session,
- ACK qui confirme l'établissement de la session,
- CANCEL qui annule un INVITE en suspens,
- BYE qui termine une session en cours.

Les codes de réponse sont également similaires au protocole http comme par exemple, et de façon non restrictive, 100 Trying, 200 OK ou 404 Not Found. D'autres codes sont, en revanche, spécifiques à SIP comme par exemple 180 Ringing, 486 Busy, etc.

Le protocole SDP est un protocole qui décrit la session en identifiant plusieurs informations dont notamment l'adresse IP de l'émission, l'adresse IP de la destination, le numéro du port émetteur, le numéro du port destinataire, le nom du protocole de transport, l'identification de la session, le protocole de connexion (Internet,...), le type de média concerné (audio, vidéo,...), le format du media (H261 Video, MPEG Video,...). Le protocole SDP est couramment utilisé dans le protocole SIP expliqué plus haut ou dans le protocole RTSP (Real Time Streaming Protocol).

Le système comprend au moins un serveur CSCF (Call Session Contrôle Function) pour la gestion de requête SIP et SDP entre différents terminaux (3, 4, 5) et les serveurs d'applications cette fonction fait intervenir trois grands modules : P-CSCF (proxy, serveur mandataire), S-CSCF (serving serveur) (1) et I-CSCF (interrogating, serveur d'interrogation). Le serveur S-CSCF (1) joue alors le coeur de l'architecture IMS en se positionnant à l'intersection des communications de différents terminaux (3, 4, 5), téléphone (3, 5a), soft-phone (4a) ou browser http, qui peuvent être SIP (3), audio et/ou vidéo, ou encore fonctionnant avec des dispositifs passerelles (5b), par exemple 3G associé à une passerelle 3G/SIP. Ces terminaux (3, 4, 5), téléphone, soft-phone ou browser http, peuvent également se trouver associés à d'autres terminaux comme par exemple un téléviseur (4b) ou un projecteur (4c). Il apparaît nécessaire que les terminaux (3, 4, 5) soient capables de supporter des signaux INVITE sans SDP, des signaux INVITE avec SDP mais sans média, des signaux re-INVITE avec SDP mais également à envoyer et recevoir des flux, audio et/ou vidéo, vers des machines aux adresses IP différentes.

Le serveur S-CSCF (1) est un serveur SIP qui a la responsabilité d'interagir avec les bases de données des serveurs du réseau. Le serveur S-CSCF (1) est associé avec un MDS (*Mobility Session Server* ou en français *Mobilité De Service*) (2) qui tient le rôle de serveur d'application de mobilité avec notamment une application de mobilité de service et une application web ou http qui fournit une fonction de télécommande. Le MDS se retrouve en coupure de flux de communication lorsqu'un abonné au service établit une communication. Le S-CSCF est l'aiguilleur et le contrôleur des messages de signalisation SIP défini dans l'IMS. Le MDS permet de faire toutes les actions non-standards qui sont l'objet de la présente invention en interceptant la signalisation SIP standard et en mettant en oeuvre la signalisation associée à l'action provoquée par le signal déclencheur. Le serveur MDS (2) fonctionne avec un logiciel (2a) de fonctionnement SIP particulier qui lui permet d'établir et de modifier un ou plusieurs flux média, audio et/ou vidéo, vers un ou plusieurs terminaux (3, 4, 5) au cours d'une session de communication donnée. Ce logiciel (2a) de fonctionnement présente une interface, par exemple java, qui permet d'ajouter, modifier ou supprimer des contextes SIP de terminaux, mais également d'enregistrer un dispositif de surveillance pour être informé des changements d'état des terminaux ainsi que d'associer à chaque contexte SIP d'un terminal, les contextes vers lesquels les flux média, respectivement audio et vidéo, doivent être dirigés. Le fonctionnement de ce logiciel (2a) peut être tributaire d'un signal de déclenchement particulier qui commande des changements d'état spécifiques dans les transferts de flux de la session de communication.

Dans certains cas, le serveur MDS (2) est associé à un serveur SSAV (6) qui forme un terminal comprenant une base de données intégrant un ou plusieurs fichiers, audio et/ou vidéo, dans un ou plusieurs formats, obtenu par un ou plusieurs codecs pour que les fichiers soient susceptibles d'être lus par un large panel de terminaux (3, 4, 5). Ces données peuvent également être enregistrées dans un format pour être associées à un moyen présentant une fonction de transcodage intégrée, toutefois cette seconde solution a l'inconvénient de pouvoir générer des défauts vidéo tout en étant plus consommatrice de ressources.

Selon un mode de réalisation particulier, la commande de l'orientation des transferts des flux média se fait depuis une interface web, par exemple un browser, disposée au niveau d'au moins un des terminaux du système (3, 4, 5) ou pas. A partir de la télécommande contrôlée par l'utilisateur qui l'exécute, le serveur MDS retrouve le contexte de l'appel de l'utilisateur de sorte que le browser affiche l'URI (User Registrar Identifier) utilisé par l'utilisateur ainsi qu'une liste de terminaux (3, 4, 5) présentant notamment les capacités (audio et/ou vidéo) de chacun et l'état (inactif, occupé ou disponible). Cette interface web ou http permet de définir les adresses SIP du ou des terminaux (3, 4, 5) vers lesquels les flux média doivent être transférés sous la forme de requêtes http transmises au serveur MDS (2). A partir des adresses web, IP ou d'une application *SessionID*, la session applicative SIP de l'utilisateur est identifiée par le serveur MDS (2). Si en revanche, aucun élément ne permet d'identifier le terminal (3, 4, 5) de l'utilisateur, le serveur MDS (2) retourne une page html à l'utilisateur pour lui permettre d'indiquer son identité publique SIP à partir de laquelle le serveur MDS (2) est en mesure de retrouver le contexte d'appel en cours. Dans le cas où aucun contexte d'appel ne peut être retrouvé, le serveur MDS (2) retourne une page d'erreur.

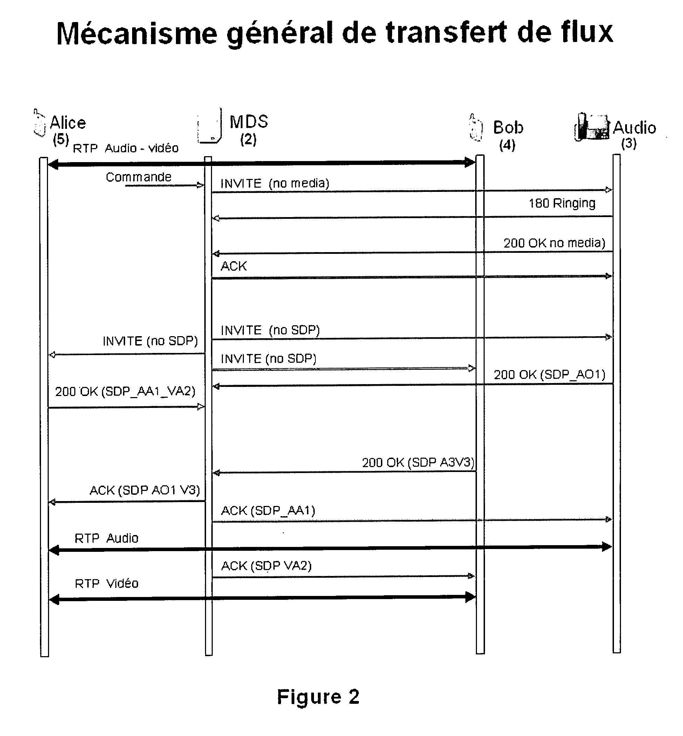

La figure 2 présente un procédé général de fonctionnement du contrôle et de la gestion des transferts de flux média expliqué au travers d'un exemple de transfert du flux média audio, au niveau d'un utilisateur, depuis un premier terminal (4a) vers un second terminal (3). Le transfert se trouve déclenché suite à la réception par le serveur MDS (2), au cours d'une session de communication entre au moins deux utilisateurs (par exemple Alice et Bob), d'un signal déclencheur commandant spécifiquement le transfert du flux média audio du premier terminal (4a) vers le second terminal (3). Ce signal déclencheur peut être, par exemple, une requête http transmise par un dispositif de télécommande d'un terminal utilisé par un des interlocuteurs de la communication. De façon générale, le signal déclencheur peut permettre la modification, l'introduction ou la suppression d'un ou de plusieurs terminaux (3, 4, 5) reconnus SIP par le MDS (2), ces terminaux (3, 4, 5) étant récepteur et/ou émetteur. La réception du signal déclencheur est suivie par une étape de connexion du serveur MDS (2) aux différents terminaux (3, 4, 5) du système qui interviennent dans le transfert lors de la session. Dans l'exemple de la figure 2, il s'agit des terminaux Alice et Bob mais également du terminal Audio vers lequel le flux média audio de Bob va être transmis. De façon générale, il convient de remarquer que ces terminaux peuvent être aussi bien des terminaux accessibles par un utilisateur (3, 4, 5) qu'un terminal formé par un serveur comme le serveur SSAV (6) ou autre. Cette connexion s'effectue par l'envoi d'un signal d'invitation n'intégrant pas un protocole SDP (INVITE (No SDP)) pour participer à la suite de la session de communication aux différents terminaux SIP qui interviennent dans le transfert lors de la session. Chacun des terminaux qui ont reçu le signal d'invitation répond alors par un signal SDP (200 OK) qui transmet une description de l'offre, audio et/ou vidéo, qu'il propose. Même si le transfert de flux ne concerne qu'un seul flux média, audio ou vidéo, le signal SDP de réponse réalise une description de l'offre, audio et/ou vidéo, proposée, comme le montre la figure 2. Une fois que tous les terminaux contactés ont répondu au serveur MDS (2), le serveur MDS (2) effectue une analyse et une gestion des offres transmises par les terminaux pour réorganiser le routage d'au moins un flux média, en l'occurrence le routage du flux média audio dans l'exemple montré par la figure 2. Le routage répond ainsi au signal déclencheur du procédé. Le mécanisme du procédé se poursuit alors au niveau du MDS (2) par l'envoi par le MDS (2) de plusieurs signaux aux terminaux qui commandent l'établissement d'une nouvelle organisation des flux de transfert au cours de la session. Ces signaux définissent ainsi les terminaux SIP qui interviennent dans la communication pour le transfert d'au moins un signal de flux média, audio et/ou vidéo. Dans l'exemple présenté par la figure 2, ces signaux de commande (ACK (SDPAxVy)) définissent le nouveau positionnement du flux RTP Audio entre Alice et le terminal Audio tout en confirmant le maintien du flux RTP Vidéo entre Alice et Bob.

L'étape de connexion du serveur MDS (2) aux différents terminaux peut imposer au préalable l'établissement d'un dialogue SIP entre les deux unités applicatives. Ceci est nécessaire lorsqu'aucun échange n'existe entre le serveur MDS (2) et un terminal, le terminal se trouvant hors de la communication en cours. Un exemple de ces étapes préalables est représenté sur la figure 2. Pour ce faire, le serveur MDS (2) émet un signal INVITE sans média au terminal. Ce signal se réalise avec un média inactif, c'est-à-dire, par exemple, que le paquet SIP transmis par le serveur MDS (2) présente une ligne média vide. En répondant à ce signal, le terminal invité établit un dialogue avec le serveur. Il peut être noté que le serveur SSAV (6) répondant toujours immédiatement, il est rare qu'il soit nécessaire au serveur MDS (2) d'établir un dialogue préalable avec le serveur SSAV (6). Par ailleurs, il convient de noter que la mise en place d'un dialogue SIP avant la connexion au serveur MDS (2) permet de résoudre les problèmes éventuels de connexions différées avec des temps de confirmation de réception d'une invitation par le signal SDP (200 OK) qui serait trop long pour permettre le bon déroulement du procédé général de transfert de flux, les temps de réponse trop long imposant des retransmissions de la part des terminaux les plus rapides à répondre.

Un objectif de l'invention est de permettre la modification du routage des flux média avec notamment une séparation des flux audio et vidéo entre deux terminaux à partir d'un terminal initial. Ainsi, l'utilisateur d'un terminal peut transférer momentanément des flux média sur des équipements terminaux plus appropriés pour le déroulement de la communication, puis rapatrier le ou les flux sur le terminal initial à tout moment. Pour ce faire, l'utilisateur commande le transfert au moyen de la télécommande http du MDS (2), qui peut être intégrée à un terminal, en sélectionnant un ou plusieurs terminaux destinés à recevoir le ou les flux média puis en transmettant un signal déclencheur particulier. Selon un mode de réalisation particulier, la télécommande affiche d'une part les adresses, par exemple http ou les contextes SIP de l'ensemble des terminaux disponibles et d'autre part les adresses des terminaux sélectionnés pour réceptionner respectivement un flux média audio et le flux média vidéo.

Le serveur MDS (2) établit ainsi les flux média respectifs directement entre les terminaux utilisés par chaque utilisateur.

Le procédé qui permet la modification d'au moins un des terminaux consiste en une étape de réception par le MDS (2) d'un signal déclencheur de la modification d'un ou de plusieurs terminaux dans le transfert de média. Ce signal déclencheur peut être, par exemple, transmis par un des utilisateurs via une interface au niveau d'un terminal qu'il utilise. Les terminaux sont définis par l'utilisateur au moyen de son interface de commande et le signal déclencheur est transmis au MDS (2) par l'interface de commande.

Selon un premier mode de réalisation du transfert, celui-ci concerne un seul flux média et donc impose une modification sur un seul terminal extérieur à la session de communication en cours. Le procédé a donc pour objectif d'intégré le terminal initialement extérieur à la session de communication avec éventuellement une réorientation du signal d'au moins un flux média vers ce terminal de communication et, si nécessaire, le retrait du terminal dont le flux média a été détourné de la session de communication en cours, ce retrait se réalisant avec l'envoi d'un signal ACK (media desactivated) par le MDS (2) qui fait partie du signal de commande pour l'établissement d'une nouvelle organisation de la session.

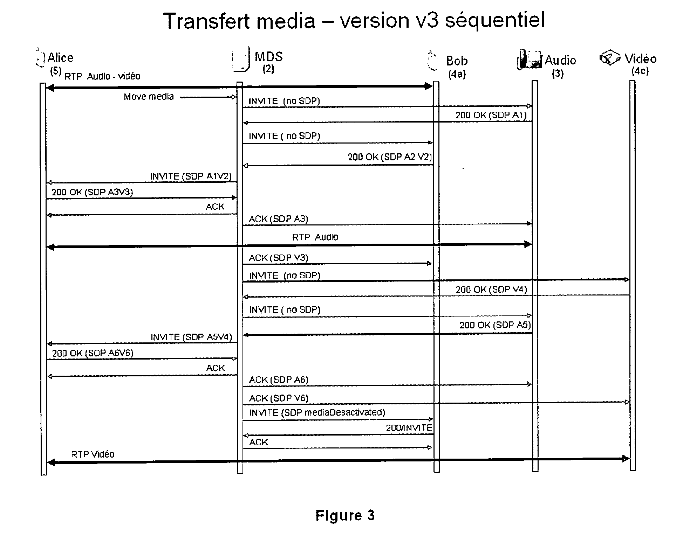

Lorsque le transfert concerne à la fois un flux média audio et un flux média vidéo, le transfert de ces flux peut être effectué séquentiellement avec le transfert d'un premier flux média et le transfert du second flux média, comme cela est représenté sur la figure 3. C'est ainsi que le procédé de fonctionnement montre une réalisation successive du mécanisme général de fonctionnement de la gestion des transferts de flux média qui est répété pour chacun des média transférés. Ce mécanisme de transfert est actionné suite à la réception d'un signal déclencheur propre à ce procédé par le serveur MDS. Lors d'une communication entre deux interlocuteurs, par exemple Alice et Bob dans l'exemple de la figure 3, le procédé comprend ainsi d'abord une étape de transfert du premier flux média, à titre d'exemple le flux média audio qui est transféré du terminal de Bob vers un terminal Audio, avec successivement :
- l'émission par le MDS (2) d'un signal (INVITE (No SDP)) d'invitation qui n'intègre pas le protocole SDP envoyé d'une part au terminal qui participe à la session de communication et dont les flux média vont être transférés, Bob dans l'exemple présenté, et d'autre part à un terminal cible sur lequel le premier flux média sera orienté, en l'occurrence le terminal Audio,
- le retour d'une réponse de la part de chacun des terminaux contactés sous forme d'un signal SDP (200/OK (SDPAxVy)) intégrant une description, audio et/ou vidéo, de l'offre qu'il propose,
- une étape d'émission par le MDS (2) d'un signal d'invitation (INVITE (SDPAxVy)) intégrant le protocole SDP et les offres proposées par les terminaux ayant répondu, ici Bob et Audio, au second terminal de la conversation dont les flux média ne sont pas transférés, c'est-à-dire Alice,
- une étape de réponse à l'invitation par le terminal, Alice, avec un signal (200/OK (SDPAxVy)) qui intègre une description de l'offre du terminal,
- l'analyse et la gestion par le MDS (2) des différentes offres transmises par les terminaux invités au MDS,
- l'envoi par le MDS (2) d'un signal (ACK (SDPAxVy)) commandant la réorganisation des flux média à chacun des terminaux invités qui a répondu, cette étape permettant d'intégrer le terminal cible, en l'occurrence Audio, dans la session de communication.

A ce transfert du premier flux média, succède le transfert du second flux média, à titre d'exemple le flux média vidéo qui est transféré du terminal de Bob vers un projecteur Vidéo, dont les étapes sont relativement similaires avec successivement :
- l'émission par le MDS (2) d'un signal (INVITE (No SDP)) d'invitation sans le protocole SDP envoyé d'une part au nouveau terminal intégré dans la session de communication, Audio dans l'exemple présenté, et d'autre part à un terminal cible, le projecteur Vidéo, sur lequel le second flux média, ici vidéo, sera orienté, ce terminal cible pouvant être le même que le terminal cible du premier flux média si il est adapté à un fonctionnement avec deux flux média,
- le retour d'une réponse par chacun des terminaux contactés sous forme d'un signal SDP (200/OK (SDPAxVy)) intégrant une description, audio et/ou vidéo, de l'offre proposée,
- une étape d'émission par le MDS (2) d'un signal d'invitation (INVITE (SDPAxVy)) intégrant le protocole SDP et les nouvelles offres proposées par les terminaux ayant répondu, au second terminal de la conversation dont les flux média ne sont pas transférés, ici Alice,
- une étape de réponse à l'invitation par le terminal, Alice, avec un signal (200/OK (SDPAxVy)) qui intègre une description de l'offre du terminal,
- l'analyse et la gestion par le MDS (2) des différentes offres transmises par les terminaux invités au MDS (2),
- l'envoi par le MDS (2) d'un signal (ACK (SDPAxVy)) commandant la réorganisation des flux média à chacun des terminaux invités qui a répondu, pour intégrer le second terminal cible, en l'occurrence le projecteur Vidéo, dans la session de communication,
- avec concomitamment la désactivation, si nécessaire, du terminal dont les flux média ont été transférés suite à l'émission d'un signal (ACK (SDP media desactivated) de désactivation par le MDS (2).

Il convient de remarquer que si l'utilisateur indique le terminal initial dont les flux média sont transférés comme terminal cible pour un des flux média, alors ce terminal n'est pas désactivé à la fin du transfert mais maintenu intégré à la session de communication. Lorsqu'un signal de fin de session (BYE) est envoyé à la place d'un signal ACK sans SDP, le terminal est sorti de la session.

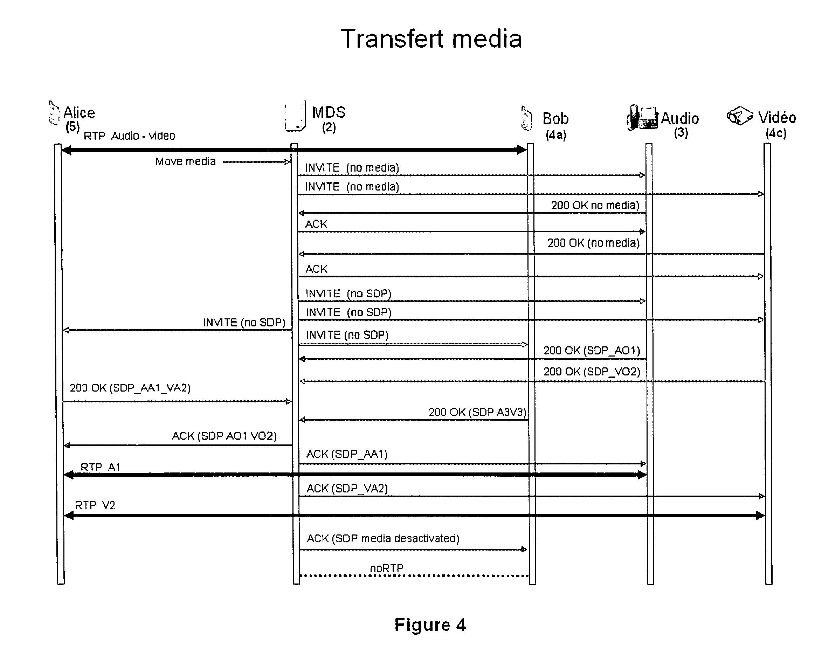

Selon un autre mode de réalisation du transfert, les transferts d'un flux média audio et d'un flux média vidéo sont réalisés simultanément, comme cela est représenté sur la figure 4. Le procédé de réorientation du transfert du flux et de modification des terminaux s'effectue alors avec des étapes sensiblement similaires à celles du procédé général de transfert, suite à la réception d'un signal déclencheur particulier au procédé par le serveur MDS. En revanche, l'émission par le MDS (2) de signal (INVITE (No SDP)) d'invitation sans le protocole SDP est réalisée à l'attention de tous les terminaux intégrés à la session de communication et des différents terminaux cibles vers lesquels chacun des flux média se trouve orienté, comme représenté sur la figure 4 où le signal est transmis d'une part aux terminaux, Alice et Bob, des interlocuteurs de la communication et d'autre part aux deux terminaux, Audio et Vidéo, invités à rejoindre la session de communication. Là encore, les terminaux cibles destinés à récupérer les deux flux média peuvent être un seul et même terminal. De même, au lieu de traiter successivement les transferts des flux média audio et vidéo lors de l'étape de gestion et d'analyse des réponses (200/OK (SDPAxVy)) provenant des terminaux invités, le serveur MDS (2) réorganise simultanément, au cours d'une même étape, les flux média audio et vidéo par l'envoi par le MDS (2) de signaux (ACK (SDPAxVy)) notamment avec une intégration des terminaux dans la session de communication en cours et éventuellement le retrait du terminal dont les flux média ont été transférés après émission d'un signal (ACK (SDP media desactivated)) de désactivation par le MDS (2).

Le rapatriement des flux média vers le terminal initial permet de rétablir les flux qui existaient directement entre les terminaux initiaux. Ce rapatriement se déroule selon un procédé similaire à celui de la séparation des flux média, les flux étant déplacés vers le terminal initial. Lorsque le serveur SSAV (6) n'est plus utilisé, les différentes sessions sont coupées pour libérer les ressources sur le serveur SSAV (6). Cette opération se réalise par l'envoi d'un signal de fin de session (BYE).

Le mécanisme de fonctionnement de l'invention permet également de gérer l'introduction d'un flux média, audio et/ou vidéo, dans la session de communication en cours entre un appelant et un appelé, par exemple entre Bob et Alice. Ce flux média provient alors du terminal formé par un serveur SSAV (6) qui joue le rôle d'une base de données qui stocke un ou plusieurs contenus, vidéo et/ou audio, comme détaillé précédemment.

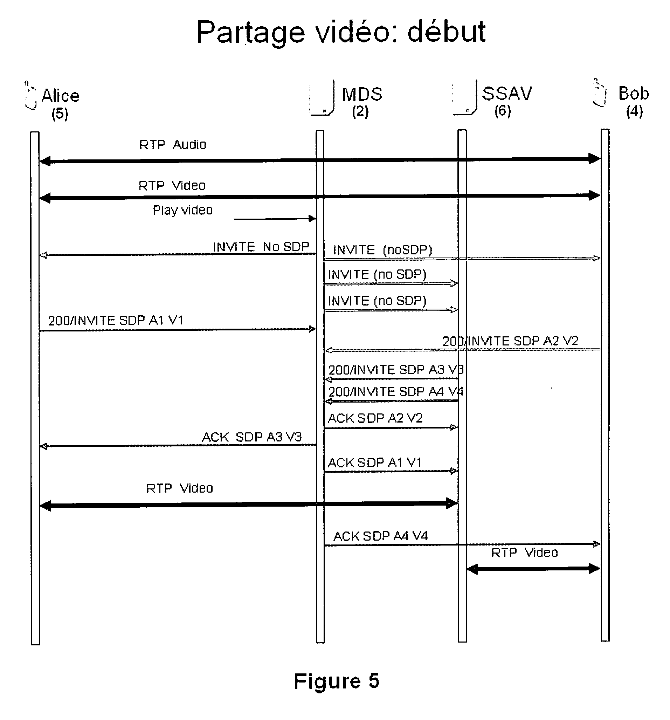

La figure 5 présente un exemple de mécanisme de fonctionnement de la modification de l'organisation des transferts de flux pour permettre l'intégration du serveur SSAV (6) dans la communication et partager le flux média, en l'occurrence un flux vidéo, provenant du serveur SSAV (6) aux terminaux utilisés par l'appelant et par l'appelé. Le procédé présente alors successivement :
- la réception par le serveur MDS (2) d'un signal de déclenchement du mécanisme, qui indique notamment quel est le fichier vidéo du serveur SSAV (6) dont la lecture doit être partagée entre l'appelant et l'appelé, Alice et Bob,
- le serveur MDS (2) émet alors d'une part un signal (INVITE (No SDP)) d'invitation sans protocole SDP à chacun des terminaux qui sont déjà intégrés dans la session de communication, Bob et Alice, et d'autre part deux signaux (INVITE (No SDP)) sans protocole SDP au serveur SSAV (6),
- chacun des terminaux réalise alors un retour de signal (200/INVITE (SDPAxVy)) décrivant l'offre respective qu'il propose pour répondre à l'invitation du MDS (2), le serveur SSAV (6) retournant deux réponses au MDS (2) de sorte qu'un flux média vidéo puisse être transféré à chacun des terminaux destinés à recevoir le flux média que sont Alice et Bob,
- le serveur MDS (2) réalise alors une gestion et une analyse des descriptions de session et commande la réorientation des transferts des flux de média, audio et vidéo, en intégrant dans la session de communication un nouveau flux média vidéo entre le serveur SSAV (6) et chacun des terminaux de la communication adaptés à la réception du flux média que sont Bob et Alice.

Le nouveau flux média RTP intégré dans la session de communication prend alors la place d'un des flux média RTP qui étaient présents entre les terminaux de la communication en cours. C'est ainsi dans l'exemple que le flux vidéo qui existait initialement entre les deux terminaux Alice et Bob est supprimé de la session de communication en cours tandis que le flux média vidéo en mémoire sur le serveur SSAV (6) vient s'y substituer.

Selon une particularité, le flux média provenant du SSAV (6) n'est transmis que vers un seul des terminaux, appelant ou appelé, Alice ou Bob. Dans ce cas, les signaux transmis entre le serveur MDS (2) et le serveur SSAV (6) sont simples et ne sont pas doublés comme présenté sur la figure 5, le serveur SSAV (6) ne transmettant qu'un seul flux média qui est orienté par le MDS (2) vers le terminal correspondant, Alice ou Bob. En revanche, le serveur MDS (2) organise le transfert des flux média de sorte que le terminal qui reçoit le flux média du SSAV (6) présente également un transfert de flux média vers le terminal de l'autre interlocuteur de la communication. De plus, lors de la réorganisation des flux, l'offre provenant du terminal qui reçoit le flux média du SSAV (6) est transmise à la fois au serveur SSAV (6) et au terminal de l'autre interlocuteur de la communication.

Selon une autre particularité, lorsque les flux média, au niveau d'un interlocuteur de la communication, se trouvent partagés entre deux terminaux, l'étape d'envoi des invitations (INVITE (No SDP)) du procédé d'intégration du serveur SSAV (6) se réalise par l'envoi d'une invitation à tous les terminaux de la communication, même à ceux qui ne sont pas concernés fonctionnellement par l'intégration du serveur SSAV (6). Ces invitations permettent la récupération des paramètres SDP pour pouvoir composer le SDP du terminal de l'interlocuteur qui partage ses flux.

A partir de sa télécommande, l'utilisateur peut contrôler le transfert du flux média transféré depuis le serveur SSAV (6), mettre en mode pause, reprendre le transfert, ou bien encore arrêter complètement le transfert du flux média. Ces différentes commandes sont réalisées à partir de requêtes http transmises depuis la télécommande au serveur MDS (2).

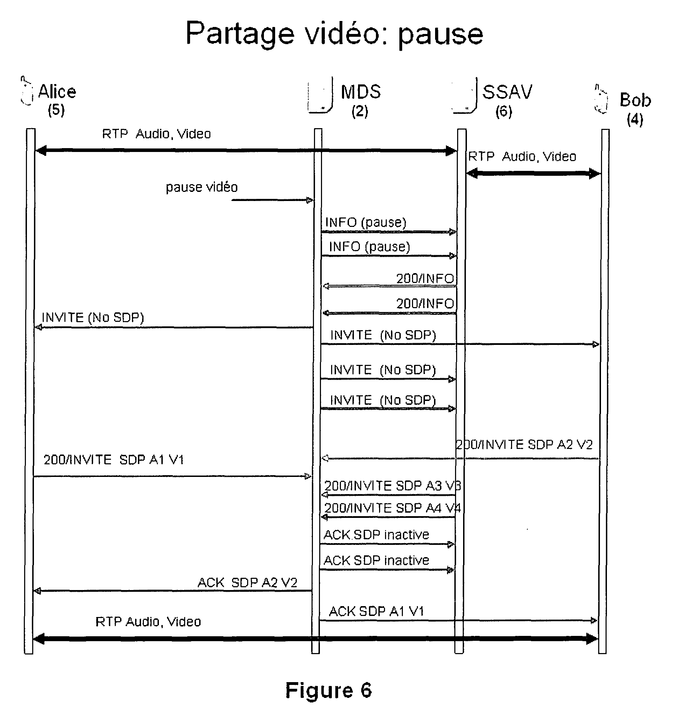

Dans le cas de la transmission d'un signal de pause au serveur MDS (2), comme le montre l'exemple présenté sur la figure 6, le serveur MDS (2) transmet un double signal de pause (INFO (pause)) au SSAV (6) qui répond par un double signal de confirmation de réception (200/INFO). Le serveur MDS envoie alors un signal d'invitation (INVITE (No SDP)) n'intégrant pas le protocole SDP à tous les terminaux de la session de communication, le signal transmis au serveur SSAV (6) étant doublé, à raison d'une invitation par chaque flux transféré du serveur SSAV (6) à un terminal. Chaque terminal répond à chaque invitation par un signal intégrant le protocole SDP (200/INVITE SDP AxVx) intégrant une description de l'offre proposée, audio et/ou vidéo, le serveur SSAV (6) fournit ainsi une double réponse. L'analyse et la gestion par le MDS (2) conduit à l'inactivation du transfert des flux media provenant du serveur SSAV (6) et au rétablissement du flux média correspondant entre les terminaux initiaux de la session de communication, notamment grâce à la transmission d'un double signal d'inactivation (ACK SDP inactive) par le MDS (2) au SSAV (6).

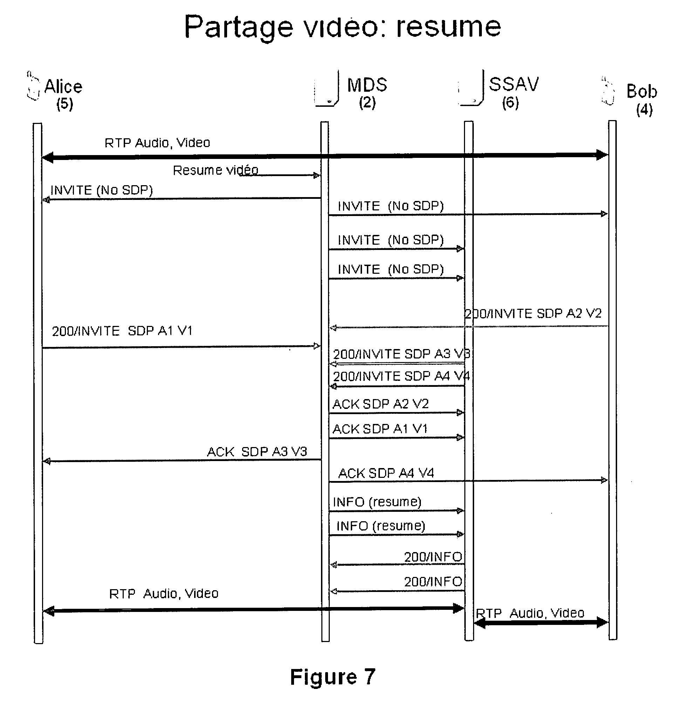

La reprise du transfert du flux média après une pause est déclenchée selon le même principe et génère l'émission de signaux d'invitation (INVITE (No SDP)) par le MDS (2) aux différents terminaux, comme présenté sur l'exemple de la figure 7, là encore, le signal envoyé au serveur SSAV (6) se trouve doublé, à raison d'une invitation par chaque flux transféré du serveur SSAV (6) à un terminal. Chacun des terminaux répond à chacune des invitations par un signal intégrant le protocole SDP (200/INVITE SDP AxVx) qui intègre une description de l'offre, audio et/ou vidéo, proposée. Le serveur SSAV (6) fournit, là encore, une double réponse. L'analyse et la gestion par le MDS conduit à la réactivation du transfert des flux media provenant du serveur SSAV (6) et à la suppression du flux média correspondant entre les terminaux initiaux de la session de communication, en faisant notamment intervenir la transmission d'un double signal de reprise (INFO (resume)) par le MDS (2) au SSAV (6), que ce dernier confirme par un double signal réponse (200/INFO).

Il est important de noter que les signaux INFO sont transmis en début de procédé lors de la mise en pause et à la fin du procédé lors de la reprise. Ceci permet notamment de s'assurer qu'aucun paquet RTP n'est perdu lors du transfert.

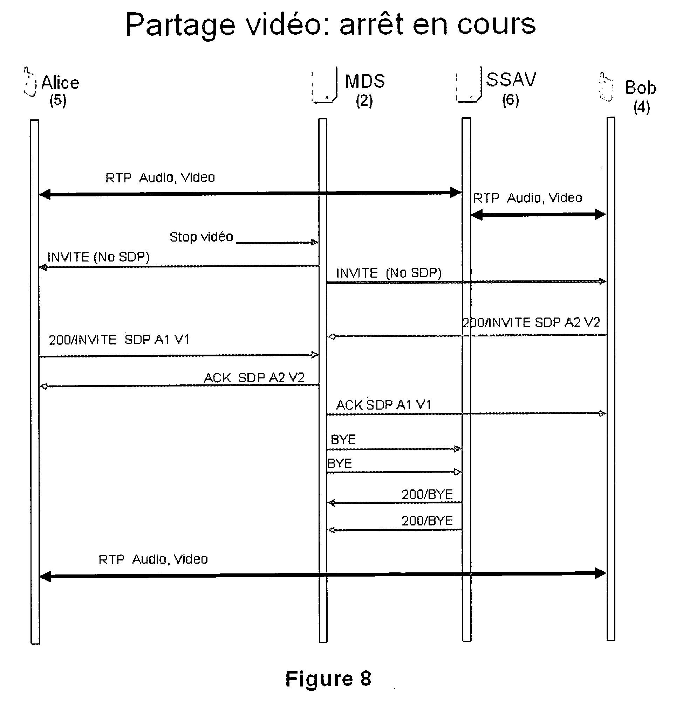

L'arrêt du transfert est déclenché de façon similaire à la pause ou à la reprise du transfert par un signal transmis au serveur MDS (2), comme montré à la figure 8. Le serveur MDS (2) transmet alors des signaux d'invitation (INVITE (No SDP)) aux terminaux destinés à rester dans la session. Ces terminaux répondent par un signal intégrant le protocole SDP (200/INVITE SDP AxVx) qui intègre une description de l'offre, audio et/ou vidéo. L'analyse et la gestion par le MDS (2) assure alors la réorientation du transfert des flux media avec la suppression des flux provenant du serveur SSAV (6) et à la réactivation du flux média entre les terminaux qui restent dans la session. La suppression des flux provenant du SSAV (6) est notamment assurée par l'envoi d'un double signal (BYE) par le MDS (2) au SSAV (6) dont la réception est confirmée par une réponse doublée (200/BYE).

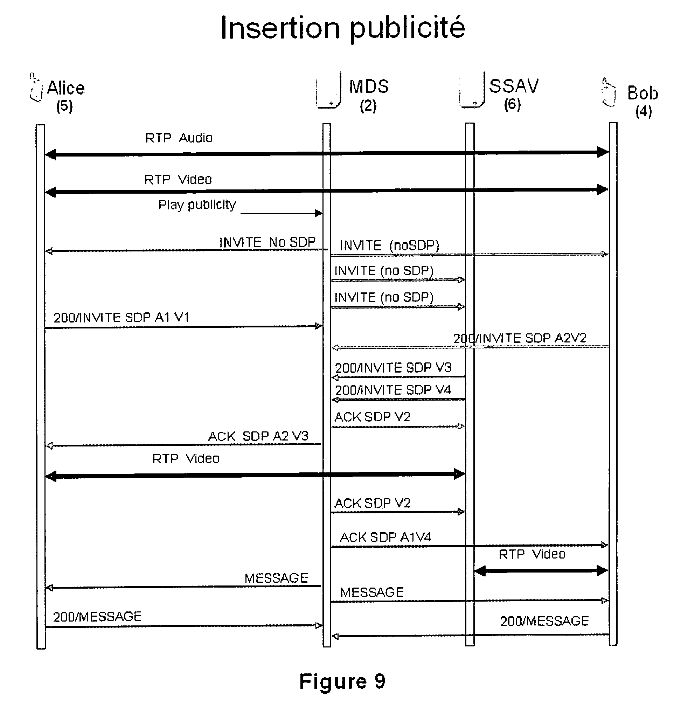

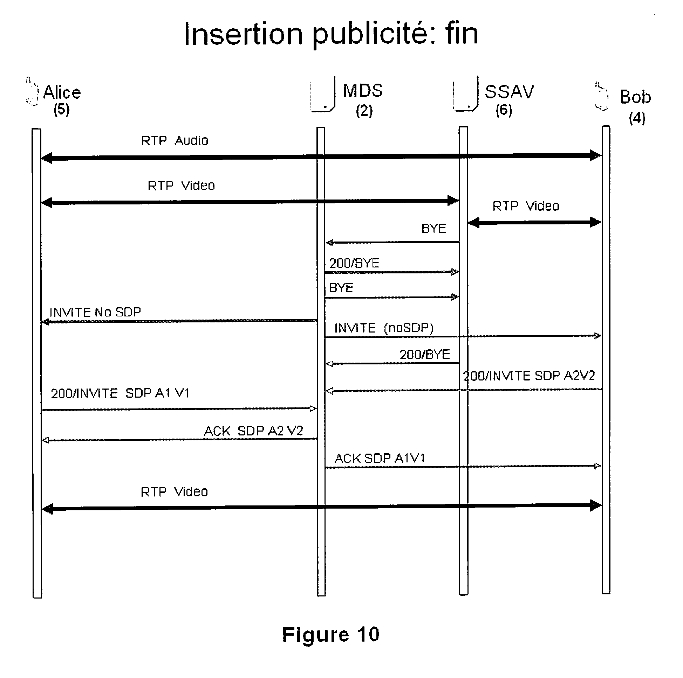

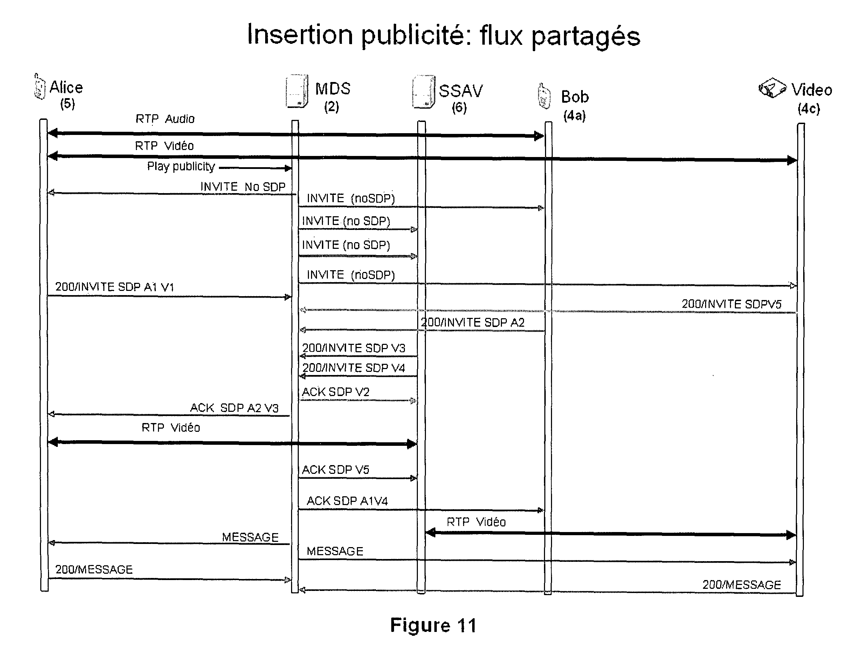

Selon une particularité de l'invention, la base de données du serveur SSAV (6) comprend des séquences média, audio et/ou vidéo, qui sont des publicités. Le déclenchement du transfert du média s'effectue sans être contrôlé par un utilisateur, mais par un « *timer »* par exemple. De plus, la publicité peut être adaptée au profil de chacun des interlocuteurs, appelant et appelé, de la session de communication, dans ce cas, le flux média transmis par le SSAV (6) à chacun des terminaux est différent et fonction des profils des utilisateurs. Des exemples de transfert d'un média publicitaire sont présentés sur les figures 9 et 11, qui montrent bien que comme pour le partage d'un flux média détaillé précédemment, le déclenchement des flux s'effectue de façon similaire, seuls les contenus transférés à chacun des terminaux par le serveur SSAV (6) peuvent différer. De même l'arrêt du transfert se réalise avec un signal BYE comme présenté sur la figure 10. Dans le cas d'une diffusion d'un flux média publicitaire, seul le signal BYE peut être émis par le SSAV à la fin de la diffusion comme le montre la figure 10, tandis que lorsque c'est un partage vidéo qui est réalisé, le signal stop peut être émis à n'importe quel instant par l'utilisateur comme le montre la figure 8. Si l'utilisateur attend la fin de la diffusion de la vidéo plutôt que d'envoyer un signal stop, le schéma des différentes étapes du mécanisme de l'arrêt du transfert du flux média vidéo sera identique à celui de la figure 10. Pour des raisons pratiques, pour que lorsque les flux média sont lancés simultanément, ils puissent se terminer au même moment, les durées des différents média publicitaires transférés aux terminaux doivent être identiques.

La figure 11, le flux média transmis par le serveur SSAV est dirigé au niveau de chaque interlocuteur de la session de communication vers le terminal adapté et requis pour réceptionner le flux média. Ainsi, dans l'exemple de la figure 11, au cours de la session de communication, le flux média audio reste transmis entre Alice et Bob tandis que le flux média vidéo qui a lieu initialement entre Alice et le terminal Vidéo, par exemple un vidéoprojecteur, est supprimé et substitué par le flux média vidéo publicitaire provenant du serveur SSAV et à destination d'une part d'Alice et d'autre part du terminal Vidéo.

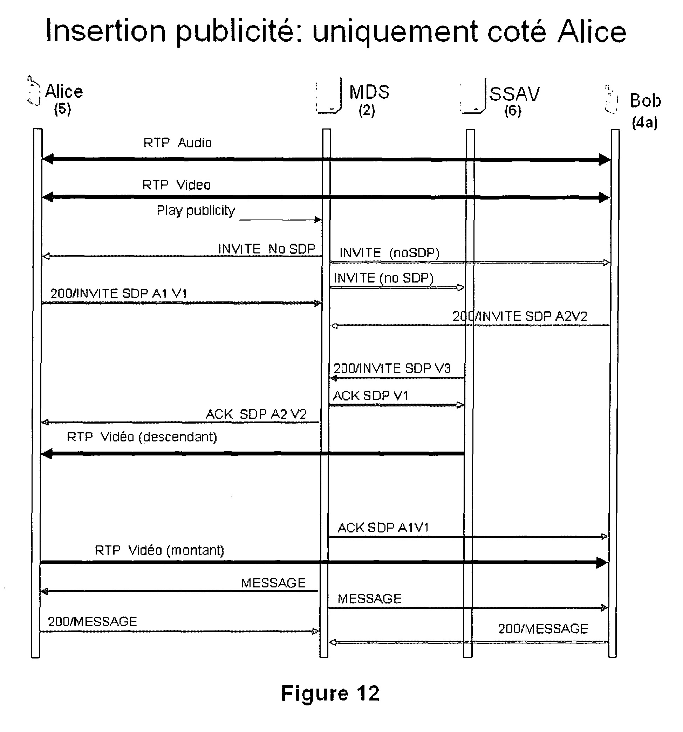

Selon une particularité de l'invention, là encore, le flux média publicitaire peut être transféré uniquement vers un seul des terminaux de la communication. Un exemple de cette insertion du flux média uniquement vers un seul terminal est présenté sur la figure 12. Le signal du flux média vidéo du SSAV est dirigé uniquement vers Alice et non vers Bob, tandis que le flux média vidéo provenant d'Alice se trouve transféré vers Bob. Ainsi, le terminal Alice reçoit son flux média vidéo d'un premier terminal formé par le serveur SSAV et transmet son flux média vidéo vers un second terminal qu'est Bob.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Procédé de modification d'au moins un terminal (3, 4, 5, 6), récepteur et/ou émetteur, dans le transfert d'au moins un signal de flux média du type RTP, Real-time Transport Protocol), audio et/ou vidéo, au cours d'une session de communication entre au moins un appelé et un appelant, sans interrompre la session de communication, cette communication faisant intervenir au moins un réseau de téléphonie, mobile et/ou fixe, qui met en jeu un ou plusieurs équipements particuliers du réseau dont notamment un serveur de mobilité (MDS) (2), le procédé faisant intervenir les formats d'initialisation et de description SIP (Session Initialisation Protocol) et SDP (Session Description Protocol) au sein d'une architecture de type IMS, **caractérisé en ce que** le procédé comprend au moins :
- une étape de réception par le MDS (2) d'un signal déclencheur d'une modification, et/ou d'une introduction et/ou d'une suppression d'au moins un terminal (3, 4, 5, 6), récepteur et/ou émetteur, parmi les terminaux (3, 4, 5, 6) qui participent à une session de communication en cours ou qui sont susceptibles d'y participer,
- une étape d'émission par le MDS (2) d'un signal d'invitation (INVITE (No SDP) n'intégrant pas un protocole SDP, pour participer à la session de communication en cours à au moins un terminal (3, 4, 5, 6) intervenant dans la session de communication ou destiné à intervenir dans la session de communication,
- une étape de réponse à l'invitation, de la part d'au moins un terminal (3, 4, 5, 6) ayant reçu le signal d'invitation (INVITE (No SDP), par un signal (200/OK (SDPAxVy)) intégrant une description de l'offre proposée, audio et/ou vidéo, par un protocole SDP,
- une étape d'analyse et de gestion des descriptions des offres transmises par les différents terminaux (3, 4, 5, 6) par une logique applicative assurée par le MDS (2) pour organiser un routage d'au moins un flux média compatible avec l'ensemble des terminaux concernés, cette étape débutant après réception de toutes les réponses aux signaux d'invitations,
- une étape d'envoi d'un signal (ACK (SDPAxVy)) par le MDS (2) commandant l'établissement d'une nouvelle organisation de la session et définissant les terminaux (3, 4, 5, 6) qui interviennent dans la communication pour le transfert d'au moins un signal de flux média, audio et/ou vidéo.

2. Procédé de modification d'au moins un terminal (3, 4, 5, 6) dans le transfert d'au moins un signal de flux média selon la revendication 1, **caractérisé en ce que** le signal d'invitation (INVITE (No SDP) émis par le MDS et n'intégrant pas un protocole SDP, pour participer à la session de communication en cours est transmis à deux terminaux destinés à intervenir dans la session de communication, un premier terminal destiné à recevoir un flux média audio et un second terminal destiné à recevoir un flux média vidéo, de façon à transférer simultanément les flux média, audio et vidéo, d'un même terminal.

3. Procédé de modification d'au moins un terminal (3, 4, 5, 6) dans le transfert d'au moins un signal de flux média selon la revendication 1 ou 2, **caractérisé en ce que** le procédé comprend, au préalable, une étape d'établissement d'un dialogue avec au moins un terminal extérieur à la communication et destiné à intégrer la communication, cette étape comprenant au moins :
- une étape d'émission d'une invitation (INVITE (No Media)) sans média par le MDS (2) pour au moins un des terminaux extérieurs à la communication,
- une étape de réponse à l'invitation par un signal (200/OK (No Media)) sans média, de la part du terminal ayant reçu le signal d'invitation,
- une étape de confirmation (ACK) par le MDS (2) de la bonne réception du signal émis par le terminal ayant reçu le signal d'invitation,
ces étapes de dialogue préalable éliminant les problèmes de temps de réponses lors de connexions de plusieurs terminaux extérieurs.

4. Procédé de modification d'au moins un terminal (3, 4, 5) dans le transfert d'au moins un signal de flux média selon une des revendications 1 à 3, le signal déclencheur d'une modification ordonnant, au cours d'une session de communication, la modification d'un terminal (3, 4, 5) de communication, récepteur et/ou émetteur, avec le transfert d'au moins un signal du flux média, audio et/ou vidéo, vers un terminal extérieur à la session de communication et adapté au flux média transféré, **caractérisé en ce que** l'étape d'analyse et de gestion des descriptions d'offres proposées par une logique applicative du MDS (2) assure notamment :
- l'intégration dans la communication du terminal de communication initialement extérieur à la session de communication, et/ou
- le transfert d'au moins une partie du signal du flux média, audio et/ou vidéo, au terminal de communication nouvellement intégré dans la communication, et/ou
- le retrait du terminal de communication de l'échange de flux médias par émission d'un signal SIP de désactivation (INVITE (SDP media desactivated)) par le MDS (2) à l'attention du terminal dont le flux média a été transféré au terminal nouvellement intégré, lorsque la session de communication est maintenue ouverte avec les terminaux qui ne portent plus de flux média, et/ou
- le retrait du terminal de communication de la session de communication par émission d'un signal SIP de fin de session (BYE) par le MDS (2) à l'attention du terminal dont le flux média a été transféré au terminal nouvellement intégré, lorsque les sessions des terminaux ne portant plus de flux média sont fermées.

5. Procédé de modification d'au moins un terminal (3, 4, 5) dans le transfert d'au moins un signal de flux média selon une des revendications 1 ou 3, le signal déclencheur d'une modification ordonnant, au cours d'une communication, le transfert du signal du flux média, audio et/ou vidéo, depuis un terminal intégré dans la session de communication vers un ou plusieurs terminaux de communication extérieurs à la session de communication et aux fonctionnements adaptés à au moins un flux média, audio et/ou vidéo, **caractérisé en ce que** le procédé assure un transfert successif du signal du flux média audio et du signal du flux média vidéo depuis le terminal initialement intégré dans la session de communication vers un ou plusieurs nouveaux terminaux extérieurs à la session de communication et adaptés au flux média, le transfert d'un premier flux média comprenant au moins :
- une étape d'émission par le MDS (2) d'un signal d'invitation (INVITE (No SDP)), n'intégrant pas un protocole SDP, pour participer à la session de communication au terminal intégré dans la communication dont les flux média vont être transférés ainsi qu'à un premier terminal, extérieur à la session de communication et dont le fonctionnement est adapté à au moins un premier flux média,
- une étape de réponse à l'invitation par les terminaux invités avec un signal (200/OK (SDPAxVy)) intégrant une description de l'offre qu'ils proposent respectivement, audio et/ou vidéo, par un protocole SDP,
- une étape d'émission par le MDS (2) d'un signal d'invitation (INVITE (SDPAxVy)) intégrant le protocole SDP et les offres proposées par les terminaux ayant répondu, au second terminal de la conversation dont les flux média ne sont pas transférés,
- une étape de réponse à l'invitation par le terminal avec un signal (200/OK (SDPAxVy)) qui intègre une description de l'offre du terminal,
- une étape d'analyse et de gestion des descriptions des offres proposées transmises par les différents terminaux que sont d'une part les terminaux de la session de communication initiale et d'autre part le premier terminal invité, extérieur à la session de communication,
- une étape d'intégration dans la session de communication du premier terminal invité par transfert du signal d'un des flux média, audio ou vidéo, le signal de flux média non transmis étant maintenu avec le terminal initialement intégré dans la session de communication et dont au moins un flux média est transféré,
le transfert d'un second flux média comprenant au moins :
- une étape d'émission par le MDS (2) d'un signal d'invitation (INVITE (No SDP)), n'intégrant pas un protocole SDP, pour participer à une session de communication d'une part au nouveau terminal intégré dans la communication et d'autre part à un second terminal récepteur, extérieur à la communication et au fonctionnement adapté à au moins un second flux média,
- une étape de réponse à l'invitation par les terminaux invités avec un signal (200/OK (SDPAxVy)) intégrant une description de l'offre proposée par chaque terminal, audio et/ou vidéo, par un protocole SDP,
- une étape d'émission par le MDS (2) d'un signal d'invitation (INVITE (SDPAxVy)) intégrant le protocole SDP et les nouvelles offres proposées par les terminaux ayant répondu, au second terminal de la conversation dont les flux média ne sont pas transférés,
- une étape de réponse à l'invitation par le terminal avec un signal (200/OK (SDPAxVy)) qui intègre une description de l'offre du terminal
- une étape d'analyse et de gestion des descriptions des offres transmises par les différents terminaux que sont d'une part les terminaux intégrés dans la session de communication et d'autre part le second terminal récepteur invité,
- une étape d'intégration du second terminal dans la session de communication par transfert du signal du second des flux média, audio ou vidéo,
et le retrait du terminal initialement intégré à la session de communication par l'émission d'un signal SDP de désactivation (INVITE (SDP media desactivated)) par le MDS (2) à l'attention du terminal dont les flux média ont été transférés ou le retrait du terminal de communication de la session de communication par émission d'un signal SIP de fin de session (BYE) lorsque les sessions des terminaux ne portent plus de flux média.

6. Procédé de modification d'au moins un terminal (3, 4, 5) dans le transfert d'au moins un signal de flux média selon la revendication 5, **caractérisé en ce que** le premier terminal et le second terminal extérieurs à la session de communication sont un seul et même terminal qui récupère deux flux média successifs différents.

7. Procédé de modification d'au moins un terminal (3, 4, 5, 6) dans le transfert d'au moins un signal de flux média selon une des revendications 1 à 6, le réseau comprenant au moins un terminal formé par un serveur SSAV (6) intégrant une base de données contenant au moins des fichiers vidéo et/ou audio, le signal déclencheur d'une modification ordonnant, au cours de la communication, la diffusion d'au moins un des fichiers du SSAV (6) à un ou plusieurs terminaux de communication définis, récepteurs d'un flux média, vidéo et/ou audio, qui participent à la communication d'une séquence vidéo en mémoire dans le serveur SSAV (6), **caractérisé en ce que :**
- l'étape de réponse à l'invitation sans SDP (INVITE No SDP) du procédé est réalisée de sorte que le serveur SSAV (6) transmet un nombre de signaux (200/OK (SDPAxVy)) intégrant une description de l'offre média, par un protocole SDP, égal au nombre de terminaux destinés à recevoir la séquence de flux média,
- l'étape d'analyse et de gestion des descriptions de session transmises par les différents terminaux aboutit à l'intégration du serveur SSAV (6) dans la nouvelle session de communication entre les terminaux initialement présents dans la communication et le transfert d'au moins un signal de flux média, audio et/ou vidéo, à au moins un des terminaux définis depuis le serveur SSAV (6), le flux média vidéo provenant d'au moins un des terminaux étant transmis au serveur SSAV (6).

8. Procédé de modification d'au moins un terminal (3, 4, 5, 6) dans le transfert d'au moins un signal de flux média selon la revendication 7, le signal déclencheur d'une modification ordonnant, au cours de la communication, la diffusion d'un flux média, audio et/ou vidéo, du serveur SSAV (6) à un des terminaux de communication qui participent à la communication, **caractérisé en ce que** l'étape d'analyse et de gestion des descriptions des offres proposées transmises par les différents terminaux aboutie à l'intégration du serveur SSAV (6) dans la communication entre les terminaux déjà présents dans le transfert du signal d'au moins un flux média au cours de la communication, de sorte que d'une part au moins un flux média vidéo issu du serveur SSAV (6) est au moins transmis au terminal destiné à recevoir le flux média et que d'autre part le flux média émis par au moins un des terminaux est au moins transmis au serveur SSAV (6).

9. Procédé de modification d'au moins un terminal (3, 4, 5, 6) dans le transfert d'au moins un signal de flux média selon la revendication 8, **caractérisé en ce qu'**un flux média émis par le serveur SSAV (6) étant transmis uniquement à un terminal défini parmi les terminaux qui participent à la session de communication, les flux média, audio et vidéo, émis par le terminal défini récepteur du flux provenant du serveur SSAV (6), sont transmis pour l'un à au moins un autre terminal présent dans la session de communication et pour l'autre au serveur SSAV (6), de sorte que le terminal défini réceptionne au moins un flux média, audio et/ou vidéo, du serveur SSAV (6) et émet au moins un flux média, audio et/ou vidéo à au moins un terminal autre que le serveur SSAV (6).

10. Procédé de modification d'au moins un terminal (3, 4, 5, 6) dans le transfert d'au moins un signal de flux média selon une des revendications 7 à 9, **caractérisé en ce que** le procédé comprend :
- une étape de réception par le MDS (2) d'un signal déclencheur d'une pause, au cours de la communication, dans la transmission du flux média à au moins un terminal de communication défini,
- une étape d'émission d'au moins un signal de pause (INFO (Pause)) par le MDS (2) à destination du serveur SSAV (6),
- une étape de confirmation de réception du signal par le SSAV (6) (200/INFO),
- une étape d'émission par le MDS (2) d'au moins un signal d'invitation (INVITE (No SDP)) n'intégrant pas un protocole SDP, pour participer à la session de communication à au moins un terminal intervenant dans la session de communication,
- une étape de réponse au MDS (2) par chacun des terminaux pour chaque invitation reçue, la réponse étant formée par un signal (200/INVITE (SDPAxVy)) intégrant une description de l'offre, audio et/ou vidéo, qu'il propose par un protocole SDP,
- une étape d'analyse et de gestion par le MDS (2) des descriptions des offres transmises par les différents terminaux,
- une étape d'envoi d'un signal (ACK SDPAxVy) par le MDS (2) confirmant la poursuite de la session de communication sans le serveur MFR (6) et définissant les terminaux qui interviennent dans la session de communication, le serveur SSAV (6) recevant au moins un signal d'inactivation (ACK SDP Inactive) intégrant le protocole SDP.

11. Procédé de modification d'au moins un terminal (3, 4, 5, 6) dans le transfert d'au moins un signal de flux média selon la revendication 10, **caractérisé en ce que** le procédé comprend :
- une étape de réception par le MDS (2) d'un signal déclencheur d'une reprise de la transmission du flux média à au moins un terminal de communication défini, au cours de la session de communication,
- une étape d'émission par le MDS (2) d'au moins un signal d'invitation (INVITE (No SDP)) n'intégrant pas un protocole SDP, pour participer à la session de communication à au moins un terminal intervenant dans la session de communication ainsi qu'au terminal serveur SSAV (6),
- une étape de réponse (200/INVITE (SDPAxVy)) au MDS (2) par chacun des terminaux pour chaque invitation reçue, la réponse étant formée par un signal intégrant une description de l'offre, audio et/ou vidéo, proposée par un protocole SDP,
- une étape d'analyse et de gestion par le MDS (2) des descriptions des offres transmises par les différents terminaux,
- une étape d'envoi d'un signal (ACK (SDPAxVy)) par le MDS (2) confirmant la poursuite de la session de communication intégrant le serveur SSAV (6) dans la communication et définissant les terminaux qui interviennent dans la nouvelle session de communication,
- une étape d'envoi au SSAV (6) par le MDS (2) d'au moins un signal (INFO (resume)) de reprise de la transmission du flux média suspendu.

12. Procédé de modification d'au moins un terminal (3, 4, 5, 6) dans le transfert d'au moins un signal de flux média selon une des revendications 7 à 11, **caractérisé en ce que** le procédé comprend :
- une étape de réception par le MDS (2) d'un signal déclencheur d'un arrêt de la transmission du flux média à au moins un terminal de communication défini, au cours de la communication,
- une étape d'émission par le MDS (2) d'au moins un signal d'invitation (INVITE (No SDP)) n'intégrant pas un protocole SDP, pour participer à la session de communication à au moins un des terminaux intervenant dans la session de communication et qui sont autres que le terminal serveur SSAV (6),
- une étape de réponse (200/INVITE (SDPAxVy)) au MDS (2) par chacun des terminaux pour chaque invitation reçue, la réponse étant formée par un signal intégrant une description de l'offre, audio et/ou vidéo, par un protocole SDP,
- une étape d'analyse et de gestion par le MDS (2) des descriptions des offres transmises par les différents terminaux,
- une étape d'envoi d'un signal (ACK (SDPAxVy)) par le MDS (2) confirmant la poursuite de la session de communication, définissant les terminaux qui interviennent dans la nouvelle session de communication et retirant le serveur SSAV (6) dans la communication,
- une étape d'envoi au SSAV (6) par le MDS (2) d'au moins un signal d'arrêt (BYE) de la transmission du flux média, ou
- une étape d'envoi au MDS (2) par le SSAV (6) d'au moins un signal d'arrêt (BYE) de la transmission du flux média.

13. Dispositif de contrôle de la mise en oeuvre d'un procédé de modification et/ou d'introduction et/ou de suppression d'au moins un terminal (3, 4, 5, 6) dans le transfert d'au moins un signal de flux média, audio et/ou vidéo, au cours d'une session de communication selon une des revendications 1 à 12, le dispositif comprenant au moins un serveur S-CSCF (Serving Call Session Control Function) positionné à l'intersection des communications de différents terminaux d'une session de communication et auquel se trouve relié un serveur de mobilité (MDS) **caractérisé en ce que** le serveur de mobilité MDS intègre un logiciel (2a) de fonctionnement SIP capable d'établir et de modifier un ou plusieurs flux média, audio et/ou vidéo, vers un ou plusieurs terminaux (3, 4, 5) au cours d'une session de communication donnée, l'action du logiciel (2a) fonctionnement est tributaire d'un signal de déclenchement qui commande la gestion des changements d'état dans les transferts de flux de la session de communication par le serveur MDS.

14. Dispositif de contrôle selon la revendication 13, **caractérisé en ce que** le logiciel (2a) de fonctionnement présente une interface qui permet d'ajouter, modifier ou supprimer des terminaux à la session de communication en cours et/ou d'être informé des changements d'état des terminaux grâce à un dispositif de surveillance et/ou un moyen permettant d'associer à chaque terminal au moins un contexte SIP vers lesquels les flux média, respectivement audio et vidéo, doivent être dirigés.

15. Dispositif de contrôle selon la revendication 13 ou 14, **caractérisé en ce que** le dispositif comprend au moins un canal de signalisation parallèle au canal de transfert de la session média par lequel au moins un terminal (3, 4, 5, 6) est capable d'adresser une requête au serveur de mobilité MDS (2), et/ou d'effectuer une signalisation du transfert.

16. Dispositif de contrôle selon une des revendications 13 à 15, **caractérisé en ce que** le dispositif comprend une interface http (ou web) qui permet de sélectionner et de définir au moins un terminal (3, 4, 5, 6) par son adresse vers lequel est transféré au moins un flux média, cette interface étant associée à un dispositif passerelle avec un serveur SIP et SDP pour contrôler le fonctionnement des protocoles SIP et SDP du procédé.
